# EUROPEAN PATENT APPLICATION

(11) **EP 1 860 386 A1**
(43) Date of publication of application: **28.11.2007**
(21) Application number: 06381021.2
(22) Date of filing: 22.05.2006
(51) Int. Cl.: F24J 2/38, F24J 2/54, H01Q 3/08

(54) **Tracker support for devices that follow a preset path**

(71) Applicant: Cardisa Mobiliario Urbano, S.L., 30817 Lorca (ES)
(72) Inventor: Carrasco Martinez, Carlos Maria, 30817, Lorca (ES)
(74) Representative: Esteban Perez-Serrano, Maria Isabel

(57) **Abstract**

The purpose of the present invention is a tracker support for devices (3) that follow a preset path, as may be the case of an antenna or a solar panel for the production of electricity, where by means of two axes of rotation of the support governed by a control unit (5) a predefined discrete tracking process of the path of the object to be tracked is carried out regulating the start and stop movements without any loss of efficiency and minimising the wear on the components associated with a continuous movement.

## Description

### OBJECT OF THE INVENTION

The purpose of the present invention is a tracker support for devices that follow a pre-set path, as may be the case of an antenna or a solar panel for producing electricity.

In the case of an antenna the orientation is established for instance by the path of the satellite with which communication is established and in the case of a solar panel it is the apparent movement of the sun, which defines what movement has to be followed by the normal vector to the surface of the panel so that maximum advantage may be taken of solar radiation.

This support is characterised by the presence of two axes of rotation that carry out predefined discrete tracking of the path of the object to be tracked, limiting the starting and stopping movements without loss of efficiency and minimising wear on the components associated with continuous movement.

### BACKGROUND OF THE INVENTION

Already extremely well known in the prior art are the tracker supports that assure with more or less precision an alignment of the normal vector to the surface of the panel with the imaginary line that connects the centre of the panel and the sun in the case of a solar tracker.

This tracking is extremely important from the standpoint of energy efficiency as the production of electric energy is proportional to the intensity of the light and normal projection in relation to the position of the solar panel.

This normal projection means that the efficiency of the panel is proportional to the ***cos(α)*** where ***α*** is the angle between the imaginary line connecting the centre of the panel and the sun and the normal vector to the outer surface of the panel, so that the greater the alignment of both directions, the closer the value of the cosine will be to unity.

The orientation required by the tracker may be obtained by means of two angles that usually correspond to a first angle of rotation according to a vertical axis or azimuth or according to a horizontal or in-height axis.

Once the support structure is provided with the two angles, it is necessary to incorporate the driving and control means that determine the angular position of each degree of freedom at all times.

Although they also make use of two degrees of freedom, the known solutions use independent drive and control means for each angle.

The foregoing include European patent with publication number EP1241416 entitled "solar panel system with means that enable the panels to follow the direction of the sun", which has a thermally expandable liquid contained in a tank exposed to the sun's rays that acts on the end of one or more pistons, displacing them linearly, where these pistons are connected by means of drive and/or gearing members to the panels and cause them to turn on a longitudinal axis of the tank.

This solution has the drawback that the expansion of the liquid is restricted by meteorological conditions, with incorrect expansion of the liquid if clouds cover the sun over a long period of time, and the consequent faulty orientation.

Systems are also known in which two degrees of freedom are reoriented according to the output signal transmitted by a controller associated with a photoelectric cell in which the drawbacks are the same as those mentioned in the previous paragraph.

The case may also arise that the photoelectric cell becomes dirty due to the build-up of dust or traces of dirt which falsify the measurement of said cell with the resultant incorrect re-orientation of the solar tracker.

All these disadvantages are overcome by means of the invention that is now going to be described here.

### DESCRIPTION OF THE INVENTION

The present invention refers to a tracker support for devices that follow a pre-set path as may be the case of an antenna or a solar panel for producing electricity, in which a normal vector to the surface of incidence is defined, for the reception of an electromagnetic signal in the case of an antenna or solar radiation in the case of a photovoltaic panel, which must be aligned with a point of the space that moves.

The orientation of the normal vector, and therefore of the device on which it is defined follows a path determined by the movement of the sun from dawn to sunset or else by the movement of a satellite.

The movement of the support is carried out by means of two axes of rotation which perform predefined discrete tracking of the path of the object to be tracked, limiting the start and stop movements without loss of efficiency and minimising wear on the components associated with a continuous movement.

The two axes of rotation permit the variation of two angles which usually correspond to a first angle of rotation according to a vertical axis or azimuth and a second angle of rotation according to a horizontal or in-height axis.

The mechanical elements to carry out this invention may range from pump-operated hydraulic rams to screw spindles, without their being restrictive for the purpose of establishing the object of the invention, which does not lie in the type of these elements.

In the case of the solar tracker, the predefined discrete tracking is based on the fact that the radiation emitted by the sun is not point but is presented in the form of Gaussian distribution, so that small deviations of the normal vector in relation to the centre of the sun produce insignificant reductions in radiation.

In the event of the tracker being an antenna which is following the path described by a satellite, the error committed is smaller even though in the case of the solar tracker, as the distance which the satellite is located is much smaller than the distance at which the sun is located.

In this way, the tracker presents a predefined discrete tracking process due to the presence of a control unit which knows at all times the position of the element to be tracked, whether it be the sun or a satellite.

The tracker has two ring gears with a series of equidistant markers that define the number of intervals in which the first angle of rotation is divided according to the vertical axis or azimuth and the second angle of rotation according to the horizontal axis or in-height axis.

When the tracker starts up, the control unit moves it to the position in which the normal vector to the panel supported by the tracker is pointing either at the sun or else at the satellite. As this position cannot coincide with one of the equidistant markers, the control unit stops the tracker when a sensor on each of the axes of rotation of the tracker reaches the next closest equidistant marker on each of the ring gears.

The control unit then keeps the tracker stopped until the sun or the satellite advances the normal vector to the panel half the angle between each two equidistant markers, both in azimuth and in height, setting it in operation again at that point until the next equidistant markers, where it stops again.

In this way, these small deviations of the normal vector, in the case of the sun, produce insignificant reductions in radiation which are translated into similarly insignificant losses in power, much smaller than the power required if the tracker described an almost continuous movement with multiple stops and starts.

At the ends the ring gears also have different-sized or different-shaped equidistant markers, so that when the sensor reaches them, the tracker returns to the initial position.

### DESCRIPTION OF THE DRAWINGS

The present descriptive report is supplemented with a set of drawings, illustrative of the preferred embodiment but never restrictive of the scope of the invention.

Figure 1 shows a perspective view of an embodiment of the invention, where we may observe the tracker applied to a photovoltaic solar panel, in which a close view is shown of the circumferential arch ring gear which controls the azimuth.

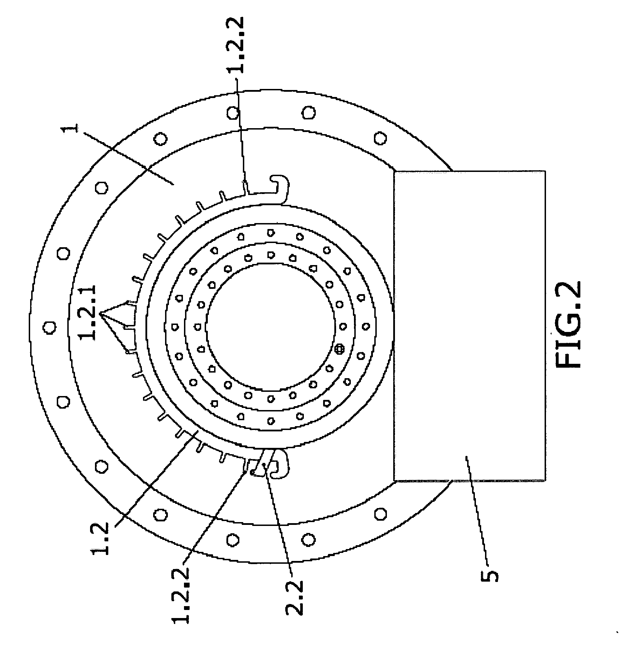

Figure 2 shows a horizontal section of the frame of the tracker such that we observe the circumferential arch ring gear which controls the angle in height.

### PREFERRED EMBODIMENT OF THE INVENTION

In the light of what is set out above, we now go on to describe in greater detail the elements comprising the tracker support for devices that follow a pre-set path, in this case for a photovoltaic solar panel.

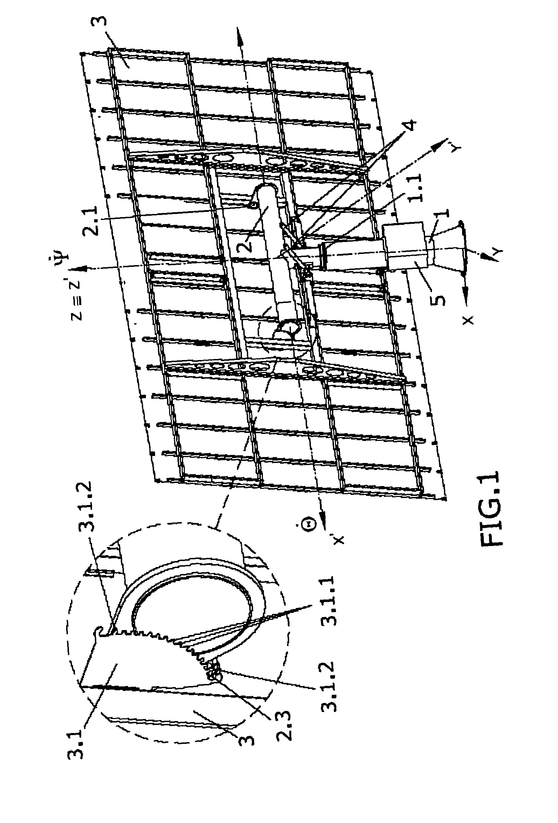

Figure 1 shows the angular support applied to the photovoltaic solar panel where we observe a base (1) that defines the axis {z} of a coordinate system integral with the ground, which we will refer to as {x,y,z}, where the base (1) has a toothed ring gear (1.1) that enables a frame (2) to turn around the axis {z} defining an initial turn (ψ) or azimuth.

After this turn a second system of coordinates {x',y',z'} is defined, integral with the frame (2), which checks that z z', where the frame has bearings (2.1) which permit the rotation of the device (3), in this case a photovoltaic panel, around the axis {x'} defining a second turn (θ) or in-height turn .

The second turn (θ) of the device (3), in this specimen preferred embodiment, is obtained by means of the thrust of hydraulic rams (4) fixed on the frame (2) and operated by a pump (not shown in the figures).

The movement of the device support (3) is carried out by means of two turns (ψ) and (θ), which perform a predefined discrete tracking of the path of the object to be tracked.

The orientation of the normal vector of the device (3) follows a path determined by the movement of the sun from dawn to sunset, or else by the movement of a satellite, governed by a control unit (5).

The base (1) has a circumferential arch ring gear (1.2) with a series of equidistant markers (1.2.1) which define the number of intervals in which the first turn (ψ) or azimuth is divided.

The support of the device (3) has a second circumferential arch ring gear (3.1) with a series of equidistant markers (3.1.1) which define the number of intervals in which the second turn (θ) or in-height turn is divided.

When the tracker starts up, the control (5) situates the device (3) at the position in which the normal vector is pointing either at the sun or else at the satellite.

As this position cannot coincide with one of the equidistant markers (1.2.1, 3.1.1) both of the base and of the support of the device (3), the control unit (3) stops the tracker when a frame (2) sensor (2.2, 2.3) is aligned with the next closest equidistant marker (1.2.1, 3.1.1) on each of the circumferential arch ring gears (1.2, 3.1).

The control unit (5) then keeps the tracker stopped until the sun or the satellite advances the normal vector to the device (3) half the angle between each two equidistant markers (1.2.1, 3.1.1), both in azimuth and in height, setting it in operation again at that point as far as the next equidistant markers (1.2.1, 3.1.1), where it stops again, so that a precision is obtained where the maximum deviation of the device (3) in relation to the object to be tracked is half the angle between each two equidistant markers (1.2.1, 3.1.1) between which the movement is carried out for each of the turns (ψ) and (θ).

At the ends the circumferential arch ring gears (1.2, 3.1) also have different-sized or different-shaped markers (1.2.2, 3.1.2), so that when the sensor (2.2, 2.3) reaches them, the tracker returns to the initial position.

The use of this mechanism other types of devices (3) simply consists of replacing the panel or panels with the device (3) to be considered, for instance, an antenna, which is set in the same place as the panels and may therefore support the same turns (ψ) and (θ).

Focusing the essence of the invention, this refers to a tracker support for devices that follow a pre-set path consisting of an essentially vertical base (1) which permits a frame (2) to rotate around said base (1) defining a first turn (ψ), where a device (3) may turn around the frame (2) defining a second turn (θ), characterised in that the normal vector of the device (3) performs a predefined discrete tracking process, governed by a control unit (5), of the path of the object to be tracked, where the support stops periodically, thus permitting the object to be tracked to advance a certain angle in relation to the normal vector of the device (3) for each one of the two turns (ψ) and (θ), and then it sets the support in motion so that the normal vector of the device (3) is advanced a certain angle in relation to the object to be tracked for each of the two turns (ψ) and (θ).

The essential nature of this invention is not altered by variations in materials, shape, size and arrangement of the component elements, described in a non-restrictive way, this sufficing to proceed to its reproduction by an expert.

## Claims

1. Tracker support for devices that follow a pre-set path consisting of an essentially vertical base (1) which permits a frame (2) to rotate around said base (1) defining a first turn (ψ), where a device (3) can rotate around the frame (2) defining a second turn (θ), **characterised in that** the normal vector of the device (3) carries out a predefined discrete tracking process, governed by a control unit (5), of the path of the object to be tracked, where periodically it stops the support permitting the object to be tracked to advance a certain angle in relation to the normal vector of the device (3) for each one of the two turns (ψ) and (θ), and it then sets the support in motion so that the normal vector of the device (3) is advanced a certain angle in relation to the object to be tracked for each one of the two turns (ψ) and (θ).

2. Tracker support for devices that follow a pre-set path according to claim 1 **characterised in that** the angle that the device (3) is advanced in relation to the object to be tracked is defined when a frame (2) sensor (2.2, 2.3) is facing one of the equidistant markers (1.2.1, 3.1.1) of ring gears (1.2, 3.1) integral with the base (1) and the device (3) for each one of the two turns (ψ) and (θ), respectively.

3. Tracker support for devices that follow a pre-set path according to claim 2 **characterised in that** the angle that the device (3) is advanced in relation to the object to be tracked or vice versa is half the angle between every two equidistant markers (1.2.1, 3.1.1) of each of the ring gears (1.2, 3.1) integral with the base (1) and the device (3) for each one of the two turns (ψ) and (θ), respectively, so that a precision is obtained where the maximum deviation of the device (3) in relation to the object to be tracked is half the angle between each two equidistant markers (1.2.1, 3.1.1) between which the movement for each one of the two turns (ψ) and (θ) is carried out.

4. Tracker support for devices that follow a pre-set path according to claim 2 **characterised in that** at the ends the ring gears (1.2, 3.1) have different-sized (1.2.2, 3.1.2) or different-shaped equidistant markers (1.2.1, 3.1.1), so that when the sensor (2.2, 2.3) reaches them, the tracker returns to the initial position.

5. Tracker support for devices that follow a pre-set path according to claim 1, **characterised in that** the first turn (ψ) of the device (3) is obtained by means of a toothed ring gear (1.1).

6. Tracker support for devices that follow a pre-set path according to claim 1, **characterised in that** the second turn (θ) of the device is obtained by means of the thrust of hydraulic rams (4) fixed on the frame (2) and operated by a pump.

7. Tracker support for devices that follow a pre-set path according to claim 1, **characterised in that** the device (3) is a photovoltaic solar panel where the object to be tracked is the sun.

8. Tracker support for devices that follow a pre-set path according to claim 1, **characterised in that** the device (3) is an antenna where the object to be tracked is un satellite.
